# DEMANDE DE BREVET EUROPEEN

(11) **EP 4 390 970 A2**
(43) Date de publication de la demande: **26.06.2024**
(21) Numéro de dépôt: 23216750.2
(22) Date de dépôt: 14.12.2023
(51) Int. Cl.: G21C 1/03, G21C 1/02, G21C 1/32, G21C 3/54, G21C 11/06, G21C 5/02

(54) **RÉACTEUR NUCLÉAIRE À SEL(S) FONDU(S), DE TYPE À NEUTRONS RAPIDES, À ARCHITECTURE DU CIRCUIT PRIMAIRE PERMETTANT UNE EXPLOITATION VERSATILE EN COMBUSTIBLE ET EN MODE DE FONCTIONNEMENT**

(30) Priorité: 19.12.2022 FR 2213883
(71) Demandeur: Commissariat à l'énergie atomique et aux énergies alternatives, 75015 Paris (FR)
(72) Inventeur: CAMPIONI, Guillaume, 75020 PARIS (FR); PASCAL, Vincent, 83560 VINON SUR VERDON (FR); GERSCHENFELD, Antoine, 92120 MONTROUGE (FR); GORSSE, Yannick, 91190 GIF SUR YVETTE (FR)
(74) Mandataire: Cabinet Nony

(57) **Abrégé**

L'invention consiste essentiellement à réaliser un réacteur nucléaire à sel(s) fondu(s) de type à neutrons rapides, dont l'architecture avec une virole cylindrique dans la cuve de réacteur exempte de modérateur ou tout du moins d'un modérateur permettant de qualifier un réacteur en tant que réacteur à neutrons thermiques, qui permet de bien séparer les zones fluidiques entre celles délimitée à sa périphérie dans laquelle le ou les échangeurs de chaleur entre circuit primaire et secondaire est (sont) agencé(s) et la zone intérieure à la virole dont le bas définit le coeur de réacteur au sein duquel les réactions nucléaires de fission en chaîne se produisent, et un réflecteur neutronique en périphérie du coeur permet d'utiliser plusieurs types de liquide combustible.

## Description

### Domaine technique

La présente invention concerne le domaine des réacteurs nucléaires à sel(s) fondu(s) (acronyme RSF ou MSR acronyme anglais pour « Molten Sait Reactor »). Plus particulièrement, elle concerne le domaine des réacteurs MSR dits de petite ou moyenne puissance ou AMR en anglais (acronyme de « Advanced Modular Reactor »),

L'invention a ainsi pour objectif principal d'adapter l'architecture du circuit primaire de tels réacteurs, plus particulièrement ceux à neutrons rapide, pour permettre une grande versatilité à la fois en termes de combustible (uranium, plutonium, thorium, actinides mineurs) et en mode de fonctionnement (brûleur ou régénérateur).

Par « réacteur à sel(s) fondu(s)», on entend ici et dans le cadre de l'invention, le sens technologique usuel, à savoir un réacteur nucléaire dans lequel le combustible nucléaire se présente sous forme liquide, dissous dans un sel fondu, à une température typiquement comprise entre 500 et 900 °C, qui joue le rôle de caloporteur.

### Technique antérieure

Les réacteurs à sel(s) fondu(s) reposent sur l'utilisation d'un sel fondu, par exemple de fluorure de lithium (LiF) et de fluorure de béryllium (BeF2), ou encore de chlorure de sodium (NaCl) et de magnésium (MgCl2), servant à la fois de fluide caloporteur et de modérateur en tant que fluide primaire au sein de la cuve de réacteur, qui est métallique ou céramique, telle qu'en SiC.

La cuve contient le sel fondu à haute température, typiquement entre 500 à 900 °C, généralement à pression ambiante.

Le combustible fissile peut être de l'uranium 235, du plutonium ou de l'uranium 233, ce dernier étant alors issu de la conversion du thorium. Un réacteur à sel(s) fondu(s) peut assurer lui-même sa surgénération à l'aide d'une couverture fertile contenant l'isotope fertile à irradier.

La réaction nucléaire est déclenchée par la concentration en matière fissile du combustible au sein de la cuve de réacteur, par la géométrie ou encore par les matériaux présents au sein de la zone critique, par exemple, un bloc modérateur en graphite.

Un réacteur à sel(s) fondu(s) peut donc être modéré par du graphite, produisant des neutrons thermiques, ou sans modérateur produisant neutrons rapides.

La présence ou non de modérateurs définit ainsi les deux grandes familles de réacteurs à sel(s) fondu(s), respectivement à neutrons thermiques et à neutrons rapides.

À partir des années 2000, les réacteurs à sel(s) fondu(s), ont été évalué, puis retenus dans le cadre du Forum international Génération IV. Ils font l'objet désormais de recherches en vue d'un déploiement comme réacteurs de quatrième génération, notamment en tant que petits réacteurs modulaires (SMR) qui sont des réacteurs nucléaires avancés (acronyme anglo-saxon AMR pour « Advanced Nuclear Reactors »), dont la capacité de puissance peut aller jusqu'à 300 MWe par unité: [1].

En théorie, les réacteurs à sel(s) fondu(s) à neutrons rapides ont l'avantage de bénéficier d'une grande versatilité à la fois en termes de combustible qui peut être mis en oeuvre (uranium, plutonium, thorium, actinides mineurs) et en mode de fonctionnement (brûleur ou régénérateur).

On rappelle ici qu'un mode « brûleur » correspond à un fonctionnement du réacteur où il y a une consommation des isotopes fissile de façon intensive avec une régénération limitée de matière fissile.

Un mode « régénérateur » d'un réacteur nucléaire est un fonctionnement selon lequel il produit à partir de matière fertile tout ou partie du combustible fissile qu'il consomme. Ainsi des neutrons, générés par une fission dans le coeur du réacteur, sont absorbés par une matière fertile qui à son tour produit de nouveaux fissiles.

En mode brûleur, un réacteur à sel(s) fondu(s) à neutrons rapides peut utiliser comme isotopes fissiles : l'uranium 235, l'uranium 233, les isotopes fissiles du plutonium et les isotopes fissiles des actinides mineurs.

En mode régénérateur, un réacteur à sel(s) fondu(s) à neutrons rapides peut utiliser les mêmes isotopes fissiles listés ci-avant et comme isotopes fertiles : l'uranium 238, le thorium 232, les isotopes fertiles de plutonium et les isotopes fissiles des actinides mineurs.

A ce jour, aucune conception n'a cependant exploité la grande versatilité des réacteurs à sel(s) fondu(s) à neutrons rapides tel que mentionnée ci-avant.

Il existe donc un besoin pour améliorer les réacteurs de type à sel(s) fondu(s), de type à neutrons rapides, notamment lorsqu'ils sont envisagés en tant que réacteurs SMR, afin d'exploiter la grande versatilité à la fois en termes de combustible qui peut être mis en oeuvre et en mode de fonctionnement (brûleur ou générateur).

Le but de l'invention est donc de répondre au moins en partie à ce besoin.

### Exposé de l'invention

Pour ce faire, l'invention concerne, sous l'un de ses aspects, un réacteur nucléaire à sel(s) fondu(s), de type à neutrons rapides, comprenant :
- une cuve de réacteur axisymétrique autour d'un axe central, délimitant intérieurement un circuit primaire de combustible sous forme liquide dans laquelle est fondu au moins un sel, l'intérieur de la cuve étant dénué d'un matériau modérateur;
- au moins un échangeur de chaleur entre le circuit primaire du réacteur et un circuit secondaire, agencé à l'intérieur de la cuve de réacteur ;
- une première virole sous la forme d'au moins un cylindre creux, d'axe central confondu avec celui de la cuve de réacteur, la première virole étant agencée dans la cuve de réacteur pour séparer l'intérieur de celle-ci en une zone centrale et une zone périphérique dans laquelle est agencé l'échangeur de chaleur de sorte qu'en fonctionnement du réacteur, le liquide combustible à sel(s) fondu(s), circule par convection naturelle selon une boucle depuis le bas de la zone centrale définissant le coeur de réacteur au sein duquel les réactions de fission se produisent, à partir duquel il s'élève par échauffement jusqu'au haut de la zone centrale où il est dévié vers le haut de la zone périphérique pour traverser l'échangeur puis descend vers le bas de la zone périphérique où il est dévié vers le coeur du réacteur ;
- un réflecteur neutronique, agencé à la périphérie du coeur contre la cuve de réacteur, pour assurer le maintien du flux neutronique dans le coeur.

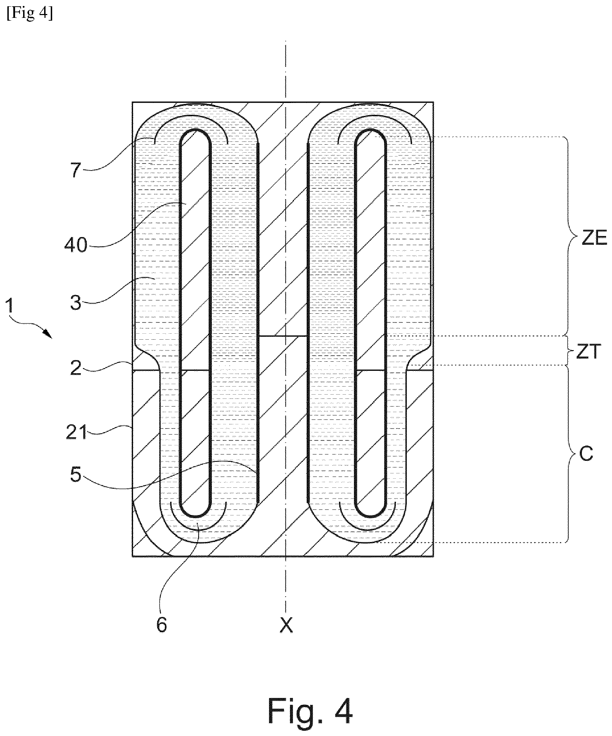

Dans le cadre de l'invention, on entend par « dénué de matériau modérateur », tout matériau qui permet de qualifier un réacteur nucléaire étant que réacteur nucléaire à neutrons thermiques. Au sens usuel, l'énergie cinétique d'un neutron rapide est supérieur à 1eV, tandis que celle d'un neutron thermique est inférieur à 1eV, typiquement de l'ordre de 0,025eV. On pourra se référer à la publication [2], et en particulier la figure 4, qui indique, pour plusieurs types de réacteurs, la fraction thermique et la fraction rapide du flux neutronique.

Ainsi, un réacteur à sel(s) fondu(s) selon l'invention est qualifié de neutrons rapides.

Typiquement, un réacteur à sel(s) fondu(s) selon l'invention peut présenter une fraction de neutrons thermiques de 0 à 0,05 et une fraction rapide de 0,6 à 0,65.

Le matériau d'un réflecteur neutronique selon l'invention peut être choisi parmi un graphite, un carbure de silicium, MgO, nickel, acier inoxydable, tungstène.

Selon une première alternative,
- le liquide combustible à sel(s) fondu(s) du circuit primaire étant un mélange de NaCl-UCl3, de préférence en proportions de 25 à 30% mol pour l'UCl3, et de PuCl3, de préférence en proportions de 5 à 36% mol, en tant que sels, avec de l'uranium appauvri,
- la partie de la première virole agencée au-dessus de l'(des) échangeur(s) est un anneau cylindrique fermé sur lui-même tandis que la partie agencée au-dessous de l'(des) échangeur(s) est un cylindre creux,
- le réflecteur neutronique est en carbure de silicium (SiC).
- le liquide combustible à sel(s) fondu(s) du circuit primaire étant un mélange de NaCl-UCl3, de préférence à 34% mol, en tant que sel avec de l'uranium enrichi U235 (HALEU), de préférence en proportions de 5 à 20%.
- la première virole est un anneau cylindrique fermé sur lui-même,
- le réflecteur neutronique est graphite.

Selon un autre mode de réalisation avantageux, le réacteur nucléaire comprend une deuxième virole agencée de manière concentrique à l'intérieur de la première virole, de sorte à guider le liquide combustible qui s'élève entre les deux zones où il est dévié.

Selon ce mode, l'intérieur de la deuxième virole définit avantageusement un espace dans lequel s'étendent des barres de contrôle et/ou de sûreté des réactions nucléaires. Autrement dit, cette deuxième virole forme une colonne débouchante agencée de manière coaxiale à l'intérieur de la première virole et au centre de la cuve de réacteur. Cette colonne centrale permet avantageusement d'orienter le liquide combustible ascendant ainsi guidé dans l'espace annulaire entre première et deuxième viroles, et de ménager un emplacement pour des barres de contrôle et/ou de sûreté.

De préférence, le diamètre extérieur de la deuxième virole est compris entre 5 et 30% le diamètre intérieur de la première virole.

De préférence encore, la première virole et le cas échéant la deuxième virole est(sont) fixée(s) par suspension au bouchon-couvercle fermant la cuve de réacteur. La première virole et le cas échéant la deuxième virole est(sont) de préférence en acier inoxydable.

Dans le cadre de l'invention, le bouchon-couvercle du coeur peut être supporté ou formé intégralement avec la dalle de fermeture du réacteur formant la partie supérieure du puits de cuve.

Selon un autre mode de réalisation avantageux, le réacteur comprend au moins un déflecteur, de préférence sous la forme d'une portion de tore, agencé au-dessous et/ou au-dessus de la première virole de sorte à répartir le débit du liquide combustible à sel(s) fondu(s) dévié. Autrement dit, ce(s) déflecteur(s) torique(s) permettent d'optimiser la répartition du débit du liquide combustible au sein de la cuve de réacteur. Le(s) déflecteur(s) est(sont) de préférence en acier inoxydable.

Selon un autre mode de réalisation avantageux, la cuve de réacteur comprend un ciel, usuellement appelé ciel de pile, rempli d'un gaz inerte, tel que de l'argon, au-dessus du liquide combustible à sel(s) fondu(s). Ce ciel permet d'absorber la dilatation thermique du liquide sel combustible au sein de la cuve de réacteur, lorsqu'il subit une variation de niveau. Selon une variante de construction avantageuse, l'(es) échangeur(s) de chaleur comprend un faisceau de tubes, de type à tubes à baïonnette, avec des tubes creux débouchant chacun à l'intérieur d'un tube borgne, définissant la partie d'échange avec le circuit secondaire, plongé sensiblement à la verticale au moins partiellement dans le liquide combustible à sel(s) fondu(s), les tubes creux débouchant étant reliés à un collecteur d'entrée et les tubes borgnes étant reliés à un collecteur de sortie du fluide secondaire.

Avantageusement, les collecteurs d'entrée et de sortie du fluide secondaire sont agencés dans le ciel de pile. Avec un tel agencement, on évite un contact direct entre ces collecteurs et le sel du circuit primaire, ce qui augmente leur durée de vie ainsi que la sécurité de fonctionnement des échangeurs, puisque la seule partie immergée reste une partie de le hauteur du faisceau de tubes.

Le réacteur nucléaire peut présenter l'une et/ou l'autre des caractéristiques dimensionnelles suivantes pour une puissance typiquement de 150MWth:
- le diamètre interne de la cuve de réacteur est compris entre 1,5 et 2m ;
- le hauteur du circuit primaire à l'intérieur de la cuve de réacteur est comprise entre 2,5 et 4m.

En fonctionnement du réacteur, la température du liquide combustible à sel(s) fondu(s) du circuit primaire peut être comprise entre 500 et 900°C.

De préférence, le fluide secondaire circulant dans l'(les) échangeur(s) est à base d'un mélange de sels fondus NaCl-MgCl₂, NaCl-MgCl₂-KCl ou encore le NaCl-MgCl₂-KCl-ZnCl₂.

Avantageusement, la température du fluide secondaire en entrée d'échangeur(s) est de l'ordre de 550°C tandis que sa température en sortie d'échangeur(s) étant de l'ordre de 600°C.

La puissance du réacteur nucléaire est avantageusement inférieure à 300 MWth, ce qui correspond à une gamme de puissance recherchée pour des réacteurs de type SMR.

Ainsi, l'invention consiste essentiellement à réaliser un réacteur nucléaire à sel(s) fondu(s) de type à neutrons rapides, dont l'architecture avec une virole cylindrique dans la cuve de réacteur exempte de modérateur ou tout du moins d'un modérateur permettant de qualifier un réacteur en tant que réacteur à neutrons thermiques, qui permet de bien séparer les zones fluidiques entre celles délimitée à sa périphérie dans laquelle le ou les échangeurs de chaleur entre circuit primaire et secondaire est (sont) agencé(s) et la zone intérieure à la virole dont le bas définit le coeur de réacteur au sein duquel les réactions nucléaires de fission en chaîne se produisent, et un réflecteur neutronique en périphérie du coeur permet d'utiliser plusieurs types de liquide combustible.

On peut avantageusement agencer un unique échangeur, c'est-à-dire avec une seule bouche d'échange avec le circuit secondaire.

Cette virole permet ainsi de garantir une circulation du liquide primaire à sel chlorure et à combustible uranium/plutonium uniquement par convection naturelle au sein de la cuve de réacteur.

En fonctionnement du réacteur, le liquide à sel(s) fondu(s) à la température froide sortant de l'échangeur descend en périphérie du coeur, change de direction en bas de la cuve au niveau d'une zone de retournement inférieure, qui peut être de préférence mise en oeuvre par un déflecteur à section partielle torique, puis s'élève en s'échauffant dans la partie centrale du coeur.

Avec la température chaude qu'il a acquis, le liquide à sel(s) fondu(s) continue de s'élever jusqu'à un niveau au-dessus de l'échangeur puis est renvoyé vers celui-ci par une zone de retournement supérieure, de préférence mise en oeuvre par un déflecteur à section partielle torique.

Au final, un réacteur nucléaire à sel(s) fondu(s), à neutrons rapides selon l'invention présente de nombreux avantages parmi lesquels on peut citer :
- une circulation uniquement par convection naturelle pour le circuit primaire avec la possibilité de mettre en oeuvre un seul échangeur entre circuits primaire et secondaire;
- une simplification des circuits fluidiques par rapport aux solutions selon l'état de l'art avec notamment la suppression de toutes les tuyauteries et pompes requises dans les concepts MSFR cités en préambule ;
- la possibilité de dimensionner une cuve de réacteur intégrant un circuit primaire combustible de taille réduite, typiquement avec un diamètre inférieur à 2m, et une hauteur hors tout inférieure à 4m, ce qui rend le réacteur conforme aux exigences des réacteurs modulaires SMR. Ainsi, un circuit primaire avec une cuve de réacteur, la virole cylindrique intérieure et son échangeur primaire/secondaire selon l'invention peut être fabriqué en usine, transporté sur site, puis utilisé dans la durée de vie du réacteur. Lors du démantèlement, un tel circuit pourrait être chargé entièrement dans un château de transport pour être traité de dans une usine adaptée. Autrement dit, l'invention permet de simplifier drastiquement la fabrication, le déploiement et le démantèlement d'un réacteur nucléaire à sel(s) fondu(s) de type à neutrons rapides, de petite et moyenne puissance ;
- la possibilité d'utiliser une même architecture de circuit primaire avec une cuve de réacteur identique, seuls les viroles et réflecteurs neutroniques étant à adapter, pour différents liquide combustible à sel(s) fondu(s), et donc mettre à profit la versatilité offerte par la technologie de sels fondus à neutrons rapides.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est une vue issue d'une simulation couplant la mécanique des fluides numérique (CFD) et la neutronique 3D, montrant la circulation du fluide primaire avec le champ des températures au sein d'un réacteur nucléaire à sel(s) fondu(s), de type à neutrons rapides selon l'invention.
[Fig 2] la figure 2 est une vue schématique en coupe longitudinale illustrant un échangeur à tube baïonnette, avec ses collecteurs d'entrée et de sortie, tel qu'il peut être agencé dans un réacteur selon l'invention.
[Fig 3] la figure 3 est une vue issue d'une simulation numérique comme selon la figure 1 pour un cas de simulation de réacteur selon l'invention dont le liquide combustible à sel(s) fondu(s) du circuit primaire est un mélange de NaCl, 25 % d'UCl3, 9% PuCl3 en proportions molaires en tant que sels, avec de l'uranium appauvri U235 à 0,2%.
[Fig 4] la figure 4 est une vue issue d'une simulation numérique comme selon la figure 1 pour un cas de simulation de réacteur selon l'invention dont le liquide combustible à sel(s) fondu(s) du circuit primaire est un mélange de NaCl, 34% d'UCl3 en proportions molaires, en tant que sels avec de l'uranium enrichi U235 (HALEU), en proportion 20%.
[Fig 5] la figure 5 est une vue schématique en coupe longitudinale d'un réacteur nucléaire à sel(s) fondu(s) à neutrons rapides selon l'invention montrant les circuits primaire, secondaire et tertiaire.

### Description détaillée

Dans l'ensemble de la présente demande, les termes « vertical », « inférieur », « supérieur», « bas », « haut », « dessous » et « dessus » sont à comprendre par référence par rapport à un réacteur nucléaire à sel(s) fondu(s) à neutrons rapides, tel qu'il est prévu en configuration verticale de fonctionnement selon l'invention.

Par « fluide primaire », « fluide secondaire », « fluide tertiaire », on entend le fluide qui constitue respectivement du circuit primaire, secondaire et tertiaire.

On précise que les différentes températures, puissances, volumes, débits ...indiqués le sont uniquement à titre indicatif. Par exemple, d'autres températures peuvent être envisagées selon les configurations notamment de puissance de réacteur à sel(s) fondu(s), de volume de liquide combustible à sel(s) fondu(s) de besoin de puissance pour l'application envisagée...

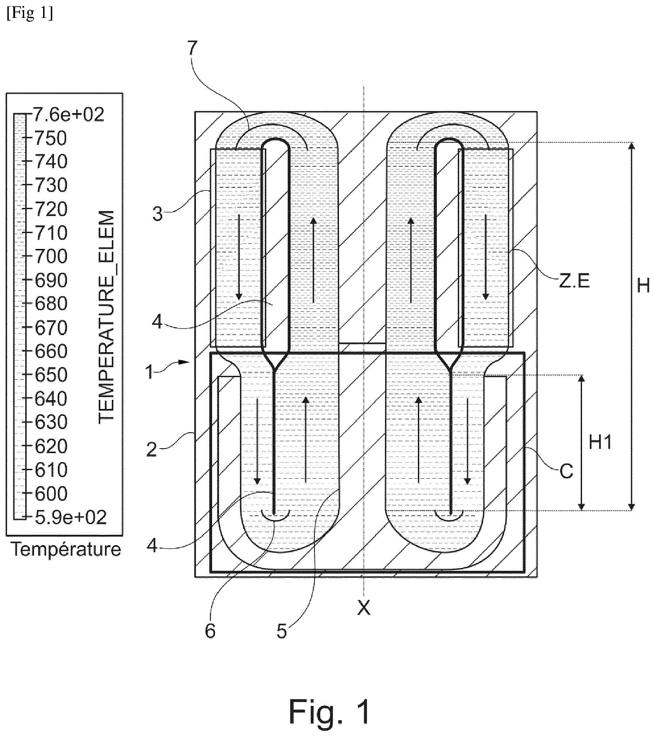

On décrit en référence à la figure 1, un réacteur nucléaire 1 à sel(s) fondu(s) de type à neutrons rapides, selon une configuration de circuit primaire selon un mode de réalisation de l'invention. Cette figure 1 est une vue de simulation numérique obtenue par un couplage de mécanique des fluides numériques (MFN ou CFD acronyme anglo-saxon pour « Computational Fluid Dynamics ») et de neutronique en 3D, comme explicité ci-après.

Le réacteur 1 d'axe central X comprend une cuve 2 à enveloppe métallique en acier inoxydable préférentiellement, d'une épaisseur de l'ordre de 10 à 20mm, et formée d'un fond de cuve hémisphérique et d'un cylindre vertical.

Cette cuve de réacteur 2 délimite intérieurement un circuit primaire de combustible sous forme liquide dans laquelle est fondu au moins un sel. L'intérieur de la cuve 2 est dénué de matériau modérateur. Autrement dit, le liquide combustible à sel(s) fondu(s) remplit et circule à l'intérieur de la cuve sans être modéré.

Un unique échangeur de chaleur 3 entre le circuit primaire du réacteur et un circuit secondaire est agencé à l'intérieur de la cuve de réacteur 2.

Une première virole 4, d'axe central confondu avec celui de la cuve de réacteur, est agencée dans la cuve de réacteur 2 pour séparer l'intérieur de celle-ci en une zone centrale et une zone périphérique dans laquelle est agencé l'échangeur de chaleur 3.

Dans cette configuration de la figure 1, la virole 4 est constituée d'une partie supérieure 40 en regard de la zone d'échange ZE qui est sous la forme d'un anneau cylindrique fermée sur lui-même, et d'une partie inférieure 41 en regard du coeur C qui est sous la forme d'un cylindre creux.

A titre d'exemple, pour une hauteur totale H égale à 2,5 m, la hauteur H1 de la partie inférieure 41 de la virole 4 est égale à 1 m.

Une deuxième virole 5 est agencée de manière concentrique à l'intérieur de la première virole 4. L'intérieur de la deuxième virole 5 définit un espace dans lequel peuvent s'étendre des barres de contrôle et/ou de sûreté des réactions nucléaires.

Les viroles 4, 5 peuvent être en acier inoxydable ou en alliage à base nickel.

Les viroles 4, 5 sont avantageusement fixées par suspension au bouchon-couvercle fermant la cuve de réacteur 2.

En bas de la cuve de réacteur 2, au-dessous de la première virole 4, un premier déflecteur 6, sous la forme d'une portion de tore.

En haut de la cuve de réacteur 2, au-dessus de la première virole 4, un deuxième déflecteur 7, également sous la forme d'une portion de tore.

Comme symbolisé par les flèches en figure 1, avec les viroles 4, 5 et les déflecteurs 6, 7 tels qu'agencés, en fonctionnement du réacteur, le liquide combustible à sel(s) fondu(s), circule uniquement par convection naturelle selon une boucle depuis le bas de la zone centrale définissant le coeur de réacteur C au sein duquel les réactions de fission se produisent, à partir duquel il s'élève par échauffement jusqu'au haut de la zone centrale entre les viroles 4 et 5 où il est dévié par le déflecteur 7 vers le haut de la zone périphérique pour traverser l'échangeur 3 puis descend vers le bas de la zone périphérique où il est dévié par le déflecteur 7 vers le coeur du réacteur C.

La virole 5 permet de guider le liquide combustible qui s'élève entre les deux zones où il est dévié, c'est-à-dire dans la zone centrale du réacteur depuis la zone de déviation par le déflecteur 6 en passant par le coeur C jusqu'à la zone de déviation par le déflecteur 7.

Les déflecteurs 6, 7 par leurs formes et leur agencement permettent chacun de répartir le débit du liquide combustible à sel(s) fondu(s) dévié.

Un réflecteur neutronique 21 en carbure de silicium est agencé à la périphérie du coeur C contre la cuve de réacteur 2.

La configuration de la figure 1 est dédiée à un le liquide combustible à sel(s) fondu(s) du circuit primaire étant un mélange de NaCl-UCl3, de préférence en proportions de 25 à 30% mol, et de PuCl3, de préférence en proportions de 9 à 11% mol, en tant que sels, avec de l'uranium naturel.

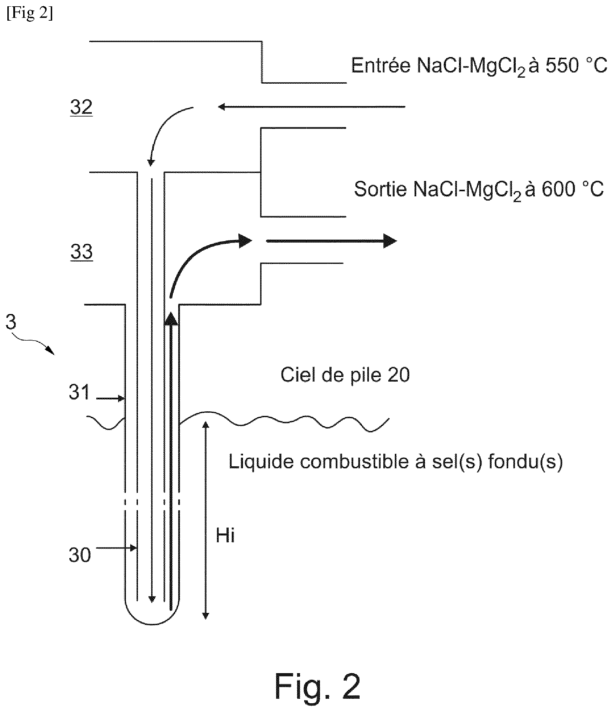

Comme illustré à la figure 2, la cuve de réacteur 2 comprenant un ciel, usuellement appelé ciel de pile 20, rempli d'un gaz inerte, tel que de l'argon, au-dessus du liquide combustible à sel(s) fondu(s).

L'unique échangeur de chaleur 3 comprenant un faisceau de tubes à baïonnette définissant la partie d'échange avec le circuit secondaire.

Comme illustré à la figure 2, chaque tube à baïonnette comprend un tube creux 30 débouchant chacun à l'intérieur d'un tube borgne 31.

Chaque tube 30, 31 est est plongé sensiblement à la verticale dans le liquide combustible à sel(s) fondu(s) selon une hauteur partielle d'immersion Hi.

Chaque tube creux débouchant 30 est relié à un collecteur d'entrée 32 tandis que chaque tube borgne est relié à un collecteur de sortie 33 du fluide secondaire.

Les collecteurs d'entrée 32 et de sortie 33 du fluide secondaire sont avantageusement agencés dans le ciel de pile 20.

Les inventeurs ont réalisé des simulations de dimensionnement d'un réacteur 1, tel que celui montré à la figure 1.

Pour une composition de sel donnée, les inventeurs ont adapté la méthodologie de conception du circuit primaire de ce type comme suit :
Etape i/: détermination des températures minimales et maximales acceptables dans le sel fondu du liquide combustible. La température minimale est en général imposée pour limiter le risque de solidification du sel, tandis que celle maximale est imposée par les températures maximales admissibles par les matériaux.
Etape ii/: À partir de la puissance thermique visée pour le réacteur 1, détermination du débit du circuit primaire nécessaire pour respecter l'écart de température imposé à l'étape i/.
Etape iii/: Pour une hauteur de circuit primaire visée, imposée par exemple par des contraintes de transportabilité de la cuve de réacteur 2, détermination des sections de passages horizontales au niveau du coeur C et de l'échangeur 3 qui sont nécessaires pour obtenir le débit du circuit primaire visé à l'étape ii/.
Etape iv/: La section horizontale du coeur C étant connue, détermination de le hauteur de coeur C nécessaire par garantir sa criticité. Pour des coeurs de puissance élevée, soit de section large, une hauteur réduite peut s'avérer suffisante. A contrario, une puissance demandée faible peut conduire à un coeur de forme plus allongée.

En pratique, les inventeurs ont réalisé des calculs de pré-dimensionnement sur le circuit primaire d'un réacteur tel que montré à la figure 1 à partir d'outils de simulation numérique couplant la thermohydraulique CFD, afin de déterminer les champs locaux de vitesse et de température et la neutronique en 3D, afin de déterminer l'atteinte de la criticité et la répartition spatiale de la puissance.

Le logiciel de simulation numérique CFD peut être celui connu sous la dénomination TrioCFD. Ce code TrioCFD a été développé par la Demanderesse et validé pour traiter efficacement divers problèmes physiques, tels que les écoulements turbulents, le couplage fluide/solide, les écoulements polyphasiques ou écoulements en milieu poreux : [3].

Le logiciel de simulation neutronique 3D peut être celui connu sous la dénomination ERANOS. Ce logiciel ERANOS a été développé et validé dans le but de fournir une base appropriée pour des calculs neutroniques fiables des coeurs de réacteurs à neutrons rapides avancés, existants ou futurs : [4].

Le logiciel ERANOS a été utilisé avec la bibliothèque de données nucléaires européennes JEFF3.1.1 fournies par l'agence de l'énergie nucléaire NEA (acronyme anglo-saxon pour« Nuclear Energy Agency »).

La publication [5] est un exemple de dimensionnement par couplage de thermohydraulique CFD avec une neutronique 3D.

Des itérations répétées sont nécessaires pour parvenir à une conception optimale.

Les caractéristiques dimensionnelles, de température et de puissance, et de liquide combustible à sels fondus obtenus sont les suivantes :
- puissance de 150 MWth ;
- température de fonctionnement du circuit primaire entre 600 et 750°C ;
- le liquide combustible à sels fondus du circuit primaire à choisir parmi un mélange de NaCl-UCl₃ de 25 à 30% mol-PuCl₃ de 9 à 11% mol avec de l'uranium naturel à 0,7%, ou un mélange de NaCl-UCl₃ à 34% mol avec de l'uranium enrichi U235 à 20% ;
- pression atmosphérique à l'intérieur de la cuve de réacteur 2.

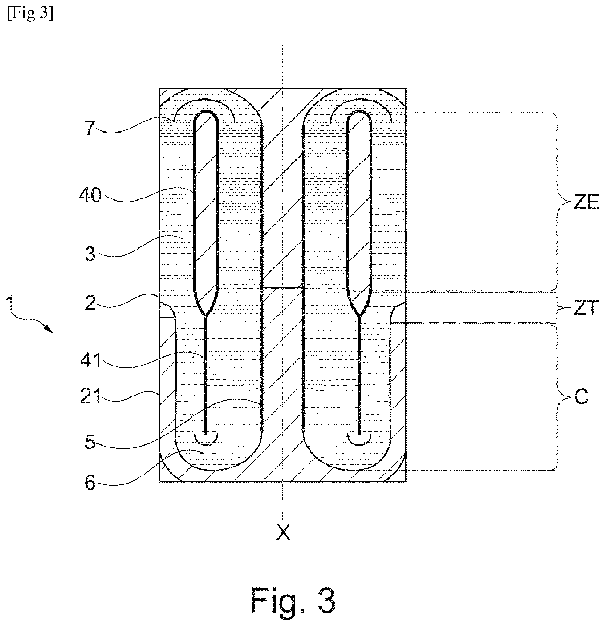

La figure 3 illustre un cas de réacteur 1 obtenu par la simulation numérique de couplage précitée, pour un liquide combustible à mélange de sels NaCl-25%UCl3-9%PuCl3 avec de l'uranium appauvri à 0,7%. Le réflecteur neutronique est en SiC.

Pour ce cas, les données obtenues sont les suivantes :
- diamètre interne de la cuve de réacteur 2 égal à 1,78m,
- diamètre externe de la cuve de réacteur 2 égale à 1, 8m,
- hauteur de la cuve de réacteur 2 égal à 2,5m,
- hauteur du coeur C égale à 0,8 m,
- hauteur de la zone d'échange ZE égale à 1,5 m,
- hauteur de la zone de transition ZT, entre la zone d'échange ZE et le coeur C égale à 0,2 m,
- diamètre interne de l'anneau 40 de la virole 4 égal à 0,89 m,
- diamètre externe de l'anneau 40 de la virole 4 égal à 1,22 m,
- épaisseur du cylindre creux 41 de la virole 4 égal à 0,05 m,
- diamètre interne de l'échangeur 3 égal à 1,22 m,
- diamètre externe de l'échangeur 3 égal à 1,78 m,
- épaisseur de du réflecteur neutronique égal à 0,145m,
- diamètre externe de la virole 5 égale à 0,32m,
- débit de liquide combustible au sein du coeur égal à 1856 kg/s avec un écart de température entre entrée et sortie du coeur C égal à 140°C ;
- facteur de multiplication effectif des neutrons keff, qui exprime le facteur par lequel le nombre de fissions se trouve multiplié d'une génération de neutrons à la suivante égal à 1,005+/- 0,2 ;
- τconv égal à 1,01.

On rappelle ici que τconv désigne le taux de conversion qui est calculé selon la méthodologie suivante :
- déterminer, pour chaque isotope possible d'U et de Pu, de sa contribution à la réaction en chaîne et l'exprimée en noyaux de Pu-239 équivalents. Par exemple, un noyau d'U-235 vaut environ 0,7 noyau de Pu-239, tandis qu'un noyau de Pu-241 en vaut environ 2,0;
- faire le bilan de production/destruction de ces isotopes pour calculer le rapport entre nombre de noyaux équivalents de Pu239 produits et le nombre de noyaux équivalents de Pu239 détruits.

On pourra se référer à la publication [6] qui explicite en détail cette méthodologie.

La figure 4 illustre un cas de réacteur 1 obtenu par la simulation numérique de couplage précitée, pour un liquide combustible à mélange de NaCl-UCl₃ à 34% mol avec de l'uranium U235 enrichi à 20%. Le réflecteur neutronique est en graphite.

Pour ce cas, les données obtenues sont les suivantes :
- diamètre interne de la cuve de réacteur 2 égal à 1,78m,
- diamètre externe de la cuve de réacteur 2 égale à 1, 8m,
- hauteur de la cuve de réacteur 2 égal à 2,5m,
- hauteur du coeur C égale à 0,8 m,
- hauteur de la zone d'échange ZE égale à 1,5 m,
- hauteur de la zone de transition ZT, entre la zone d'échange ZE et le coeur C égale à 0,2 m,
- diamètre interne de l'anneau 40 de la virole 4 égal à 0,89 m,
- diamètre externe de l'anneau 40 de la virole 4 égal à 1,22 m,
- diamètre interne de l'échangeur 3 égal à 1,22 m,
- diamètre externe de l'échangeur 3 égal à 1,78 m,
- épaisseur de du réflecteur neutronique égal à 0,145m,
- diamètre externe de la virole 5 égale à 0,32m,
- débit de liquide combustible au sein du coeur égal à 1750 kg/s avec un écart de température entre entrée et sortie du coeur C égal à 150°C ;
- facteur de multiplication effectif des neutrons keff, égal à 1,008+/- 0,2;
- τconv égal à 0,95.

Tous les composants (cuves 2, viroles 4, 5, échangeur 3) sont en acier inoxydables pour les configurations des figures 3 et 4.

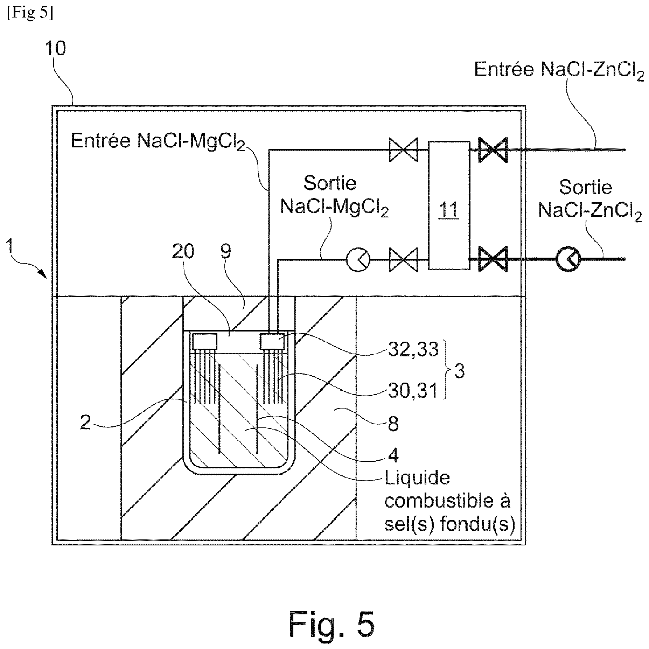

La figure 5 illustre un exemple d'intégration du réacteur 1 qui vient d'être décrit au sein d'un bâtiment réacteur 10 et les circuits secondaire et tertiaire.

Le fluide secondaire est constitué par un mélange de sels NaCl-MgCl₂ qui entre par convection forcée dans l'échangeur 3 à 550°C et en ressort à 600°C.

L'échangeur 11 entre circuit secondaire et tertiaire est au sein du bâtiment réacteur 10.

Le fluide tertiaire est constitué par un mélange de sels NaCl-ZnCl₂ qui entre par convection forcée dans l'échangeur 11 à 500°C et en ressort à 550°C.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

### Liste des références citées

[1]: E. Merle-Lucotte, M. Allibert, M. Brovchenko, D. Heuer, V. Ghetta, A. Laureau, P.Rubiolo, Chapitre "Introduction to the Physics of Thorium Molten Salt Fast Reactor (MSFR) Concepts", Thorium Energy for the World, Springer International Publishing, Switzerland (2016).
[2]: Jiri Krepel et al. "Self-Sustaining Breeding in Advanced Reactors: Characterization of Selected Reactors", Encyclopedia of Nuclear Energy 2021, Pages 801-819. https://www.sciencedirect.com/science/article/pii/B9780128197257001239?via%3Dihub
[3]: Pierre-Emmanuel Angeli et al. "OVERVIEW OF THE TRIOCFD CODE: MAIN FEATURES, V&V PROCEDURES AND TYPICAL APPLICATIONS TO NUCLEAR ENGINEERING". NURETH-16, Chicago, IL, August 30-September 4, 2015.
[4]: G.Rimpault,et al. "The ERANOS Code and data system for fast reactor neutronic analyses." PHYSOR2002-International Conférence on the New Frontiers of Nuclear Technology: Reactor Physics, Safety and High-Performance Computing, Oct 2002, Seoul, SouthKorea.
[5]: Marco Tiberga et al. "Results from a multi-physics numerical benchmark for codes dedicated to molten sait fast reactors", Annals of Nuclear Energy 142 (2020) 107428.
[6]: A.R. Baker, R.W. Ross, "Comparison of the value ofplutonium and uranium isotopes in fast reactors." In Proc. Conf. Breeding, Economics and Safety in Large Fast Breeder Reactors (Argonne National Laboratory, 1963), pp. 329-364, ANL-6792.

## Revendications

1. Réacteur nucléaire (1) à sel(s) fondu(s), de type à neutrons rapides, comprenant :
- une cuve de réacteur (2) axisymétrique autour d'un axe central, délimitant intérieurement un circuit primaire de combustible sous forme liquide dans laquelle est fondu au moins un sel, l'intérieur de la cuve étant dénué d'un matériau modérateur;
- au moins un échangeur de chaleur (3) entre le circuit primaire du réacteur et un circuit secondaire, agencé à l'intérieur de la cuve de réacteur ;
- une première virole (4) sous la forme d'au moins un cylindre creux (40, 41), d'axe central confondu avec celui de la cuve de réacteur, la première virole étant agencée dans la cuve de réacteur pour séparer l'intérieur de celle-ci en une zone centrale et une zone périphérique dans laquelle est agencé l'échangeur de chaleur de sorte qu'en fonctionnement du réacteur, le liquide combustible à sel(s) fondu(s), circule par convection naturelle selon une boucle depuis le bas de la zone centrale définissant le coeur de réacteur (C) au sein duquel les réactions de fission se produisent, à partir duquel il s'élève par échauffement jusqu'au haut de la zone centrale où il est dévié vers le haut de la zone périphérique pour traverser l'échangeur (Z.E) puis descend vers le bas de la zone périphérique où il est dévié vers le coeur du réacteur ;
- un réflecteur neutronique (21) , agencé à la périphérie du coeur contre la cuve du réacteur, pour assurer le maintien du flux neutronique dans le coeur.

2. Réacteur nucléaire à sel(s) fondu(s) selon la revendication 1, dans lequel :
- le liquide combustible à sel(s) fondu(s) du circuit primaire étant un mélange de NaCl-UCl3, de préférence en proportions de 25 à 30% mol pour l'UCl3, et de PuCl3, de préférence en proportions de 5 à 36% mol, en tant que sels, avec de l'uranium appauvri de préférence inférieur à 0,3% atomique,
- la partie de la première virole agencée au-dessus de l'(des) échangeur(s) est un anneau cylindrique fermé sur lui-même tandis que la partie agencée au-dessous de l'(des) échangeur(s) est un cylindre creux,
- le réflecteur neutronique est en carbure de silicium (SiC).

3. Réacteur nucléaire à sel(s) fondu(s) selon la revendication 1, dans lequel :
- le liquide combustible à sel(s) fondu(s) du circuit primaire étant un mélange de NaCl-UCl₃, de préférence à 34% mol, en tant que sel avec de l'uranium enrichi U235 (HALEU), de préférence en proportions de 5 à 20%.
- la première virole est un anneau cylindrique (40) fermé sur lui-même,
- le réflecteur neutronique est graphite.

4. Réacteur nucléaire à sel(s) fondu(s) selon l'une des revendications précédentes comprenant une deuxième virole (5) agencée de manière concentrique à l'intérieur de la première virole, de sorte à guider le liquide combustible qui s'élève entre les deux zones où il est dévié.

5. Réacteur nucléaire à sel(s) fondu(s) selon la revendication 4, l'intérieur de la deuxième virole définissant un espace dans lequel s'étendent des barres de contrôle et/ou de sûreté des réactions nucléaires.

6. Réacteur nucléaire à sel(s) fondu(s) selon l'une des revendications précédentes, le diamètre de la cuve de réacteur étant compris entre 1,5 et 2m.

7. Réacteur nucléaire à sel(s) fondu(s) selon l'une des revendications précédentes, le hauteur du circuit primaire à l'intérieur de la cuve de réacteur étant comprise entre 2,5 et 4m.

8. Réacteur nucléaire à sel(s) fondu(s) selon l'une des revendications précédentes, en fonctionnement du réacteur, la température du liquide combustible à sel(s) fondu(s) du circuit primaire étant comprise entre 550 et 750°C.

9. Réacteur nucléaire à sel(s) fondu(s) selon l'une des revendications précédentes, le fluide secondaire circulant dans l'(les) échangeur(s) étant à base d'un mélange de sels fondus NaCl-MgCl₂ ou NaCl-MgCl₂-KCl ou NaCl-MgCl₂-KCl-ZnCl₂.

10. Réacteur nucléaire à sel(s) fondu(s) selon la revendication 9, la température du fluide secondaire en entrée d'échangeur(s) étant de l'ordre de 550°C tandis que sa température en sortie d'échangeur(s) étant de l'ordre de 600°C.

11. Réacteur nucléaire à sel(s) fondu(s) selon l'une des revendications précédentes, dont la puissance est inférieure à 300 MWth.
